# EUROPEAN PATENT SPECIFICATION

(11) **EP 1 993 385 B1**
(45) Date of publication and mention of the grant of the patent: **08.10.2014**
(21) Application number: 06707542.4
(22) Date of filing: 10.03.2006
(51) Int. Cl.: A23L 1/40, A23L 1/00, B65D 85/64

(54) **PACKAGING COMPRISING ONE OR MORE OF COATED SOLID CONCENTRATES FOR PREPARING A BOUILLON SOUP, SAUCE OR GRAVY OR FOR USE AS A SEASONING AND PROCESS FOR PREPARING THE SAME**
VERPACKUNG, DIE EIN ODER MEHRERE BESCHICHTETE FESTE KONZENTRATE ZUR HERSTELLUNG VON BOUILLON-BRÜHE, SAUCE ODER BRATENSAUCE ODER ZUR VERWENDUNG EINES WÜRZMITTELS ENTHÄLT, UND VERFAHREN ZU IHRER HERSTELLUNG
ENSEMBLE COMPRENANT UN OU PLUSIEURS CONCENTRES SOLIDES ENROBÉS POUR LA PREPARATION D'UNE SOUPE, D'UNE SAUCE OU D'UN FOND POUR UNE UTILISATION EN TANT QU'ASSAISONNEMENT ET SON PROCEDE DE FABRICATION

(43) Date of publication of application: 26.11.2008
(73) Proprietor: Unilever N.V., 3013 AL Rotterdam (NL); Unilever PLC, London EC4Y 0DY (GB)
(72) Inventor: ACHTERKAMP, Georg, 74074 Heilbronn (DE); SCHARF, Karl Walter Ferdinand, 74223 Flein (DE)
(74) Representative: Reijns, Tiemen Geert Pieter
(86) International application number: PCT/EP2006/002298
(87) International publication number: WO 2007/104326

(56) References cited:
- EP-A- 0 954 985
- FR-A- 888 902
- GB-A- 1 142 151
- GB-A- 1 254 562
- US-A- 2 278 466
- US-A- 4 913 919
- US-A- 6 099 888
- PATENT ABSTRACTS OF JAPAN vol. 010, no. 366 (C-390), 6 December 1986 (1986-12-06) & JP 61 162157 A (SUNTORY LTD), 22 July 1986 (1986-07-22) cited in the application
- PATENT ABSTRACTS OF JAPAN vol. 004, no. 054 (C-008), 23 April 1980 (1980-04-23) & JP 55 026826 A (MEIJI SEIKA KAISHA LTD), 26 February 1980 (1980-02-26) cited in the application

## Description

### Field of the invention

The present invention relates to a process for preparing a packaging comprising one or more of solid concentrate articles for (the preparation of) bouillon (including broth), soup, sauce (including gravy), roux, or for use as a seasoning. The process involves roller compacting of ingredients to form a core, which core is then coated with a coating layer so that a concentrate is obtained of a solid core material covered by an outer layer completely enclosing the core material. The concentrate articles so-obtained are not in the traditional cube or tablet shape, but have two convex sides opposite to eachother, like the shape of a pellet, lentil, briquette, pebble, dragee, pillow, egg (optionally flattened) or ball (optionally flattened), and are coated, and can be made in a variety of sizes and packed in bulk (a plurality of articles in one packaging container) or as single items.

### Background of the invention

Bouillon cubes are well known articles in the western and non-western cooking. Such cubes or tablets are used e.g. to prepare a bouillon, stock or broth, or are used as a base for soups or added to soups, sauces and dishes for additional flavouring. Conventionally, bouillon cubes comprise solid, more or less dry ingredients such as one or more of salt, sugar, flavour enhancers (like e.g. ribotides and/or monosodium glutamate MSG), herbs, spices, vegetable particulates, colourants and flavourants (e.g. meat, vegetable or yeast hydrolysates), next to e.g. up to 30% fat or oil.

Also known are seasonings cubes or tablets in the savoury food area. Such seasoning cubes or tablets are used e.g. to season dishes or in preparation of dishes. The composition can be very much similar to bouillon cubes or tablets, or they may contain e.g. less salt and more fat, or additional components such as creamers, starch or starch-derived compounds, gums, different flavouring mixes, etcetera.

Furthermore are known dry, solid soup and sauce concentrates, either as free-flowing powder or as meltable or dissolvable particles like cubes or pellets. Such concentrates contain similar ingredients as the bouillon cubes, but generally further contain starch or other thickeners and more fat.

The most common physical formats in which such solid seasonings or concentrates are available are on the one hand powders or granulates and on the other hand unit-dose concentrates such as cubes or tablets. Powders and granulates have some advantages, e.g. simple cheap packaging, good dispersibility, and the amount to be dosed is flexible: e.g. by taking a certain weight or volume of powders or granules from the sachet or jar. Advantages of tablets and cubes are convenience in dosing a specific amount (one or more tablets) and appearance.

Granulates can be prepared by mixing all ingredients in the proper proportion, followed by granulating to obtain granules, by using equipment known in the art. Granulates are generally offered in bulk-type packaging (i.e. a plurality of granule particulates in one container) like sachets, pouches or jars. Granules are typical small, having a weight of e.g. 0.03 g or less per granule, and a size of e.g. 2-5 mm long and 1-3 mm thick.

The conventional bouillon and seasoning cubes are prepared by mixing the ingredients, followed by pressing to a cube, either in a mould which already contains a wrapper, which is then folded to a closed wrapper after the pressing operation, or the cube, after pressing, is removed from the mould, and a wrapper is wrapped around it Alternatively, cubes or tablets can be prepared by mixing all ingredients followed by extruding and cutting the extrudate, followed by wrapping a wrapper around it. The wrappers (usually made from sheet or foil-like material, such as aluminium, paper, plastic or composite sheet or foil like materials) around the conventionally pressed or extruded cubes are wrapped fairly tightly around the cube or tablet. The cubes are usually offered, individually wrapped, with several wrapped cubes packed in a box. The cubes typically have a size of 1.4x1.4x1.4 cm or larger, and tablets typically have a size of 0.8x2x3 cm or larger, and cubes and tablets usually have individual weights of at least 2 g each.

Although both the small granules as well as the large cubes/tablets have their advantages, there is a need for a process that allows manufacturing solid concentrates for preparing a bouillon (including broth and soup), sauce (including gravy, sauce binder, roux) or for use as a seasoning concentrate, in a variety of sizes, and in particular the article size in between granules and cubes/tablets. Preferably, the method should give articles that combine packaging advantages of granules, with the ease of dosing of cubes/tablets.

JP 61/162,157 discloses instant solid soup articles comprising freeze dried ingredients coated with a solid fat.

JP 55/026,826 discloses solid concentrates for soup moulded by compression and coated with a fat.

### Summary of the invention

It was found that by roller compacting mixtures of (dry) particulates like salt, starch or flour, taste or flavour imparting substances, in the way as described below, solid concentrates for preparing a bouillon (including broth and soup), sauce (including gravy, sauce binder, roux) or for use as a seasoning concentrate can be manufactured in a variety of sizes, and in particular the article size in between granules and cubes/tablets. It was found that manufacturing method as set out below allows manufacturing such concentrates having weights of at least 0.04 g up to 30 g. Preferably, the weights of such concentrates should be 0.05-20g. In particular, the method is suitable for articles having a weight of 0.1-12g, most preferably 0.1-8g.

Thus, the invention relates to a process for preparing a container as in claim 11.

In the above process, the amount coating applied to the core for covering it is preferably 5-50% by weight (on the total concentrate article), and the weight of the core is preferably 50-95% (by weight on total cocnentrate article).

The above process may lead to a container as in claim 1.

The invention further relates to the use of a packaged solid concentrate article as defined above and below for preparing a bouillon, soup, sauce, roux, or gravy or for use as seasoning.

The packaged concentrate articles according to the invention can be made into a variety of sizes (e.g. as expressed by a variety of weights). The method found is suitable for manufacturing concentrates for preparing a bouillon, soup, sauce, roux, gravy or for use as a seasoning, the articles having weights of at least 0.04 g up to 30 g, preferably 0.05-20g, more preferably 0.1-12g, most preferably 0.1-8 g. For some applications, weights below 2, preferably below 1.5 g, more preferably below 1.2 g can be preferred, with minimum weights of 0.04 or 0.05 g per article.

Roller compacting is also referred to as roller pressing or roll compacting.

In the process as set out above step (c) can be repeated with two or more different coating layer materials to get composite layers.

### Detailed description of the invention

Of the packaged coated concentrate articles according to the invention, although minor amounts of the surface of the core or the articles may be uncovered by the coating layer, it is preferred that the coating layer completely encloses the core material of the articles. In order for good physical stability (e.g. avoiding flaking off of the coating layer) it is also preferred in the present invention that the coating layer is adhered to the core material. Preferably, the coating layer is of an edible material, so that it does not have to be peeled off.

For the articles and process according to the present invention, it may be preferred that the container, when closed, has a volume which is at least 10%, preferably at least 15%, and more preferably at least 20% larger than the volume of the solid concentrate article(s) in it. This can allow easier dosing. The word "container" should be interpreted as a packaging surrounding the concentrate article. It can be prepared of a wide variety of materials. It does not necessarily mean that it hermetically seals of the concentrate article from the environment, but it can mean that. It can be rigid, flexible, or something in between, or a combination of rigid or flexible material. It can be an asset when the container shows its content. Hence, it may be preferred that part of the container wall or closure (i.e. part of the container) is (partly or wholly) transparent so as to display the contents.

The concentrate articles according to the present invention can each be in a separate container. Suitable packagings for such purpose encompass blister pack, loose wrapper, bag, pouch, or flowpack. A multitude of concentrates in containers may be linked together, such as e.g. a blister pack in the form of a strip or sheet, containing a plurality of (sealed) cavities, each cavity containing a concentrate article according to this invention. Also a flowpack may consist of a strip of cavities linked together, each cavity comprising one concentrate article according to the present invention.

It may also be possible to pack a plurality of solid concentrate articles as manufactured as herein described in one container. Hence, the invention also relates to a process according to this invention wherein a plurality of solid concentrate articles as obtained under step (b) of the process are packed jointly in one container. Jointly packed means herein that a single packaging container comprises more than one solid concentrate. Usually it will mean that the solid concentrates are in contact with oneanother. Suitable containers for such comprise: a pot, jar, can, tin, box, bag, pouch, flowpack, sachet, or doypack.

Preferably, in the present invention the packaging container comprises 2-50000, more preferably 10-2000 concentrate articles according to the invention (all depending on size: for the small lentil-type articles aimed at institutional use, the number may be to the upper limit, for domestic use of the larger articles the number will be more to the lower limit). In theory all sorts of sizes are possible for the moulds of the rollers to prepare the core, but it may be preferred that the surface area of one mould is at least 0.1 (preferably at least 0.2, most preferably at least 0.3) cm². It may be preferred that the surface area of one mould is below 20 cm², preferably the surface area of one mould is below 10 cm². The moulds for relatively small particles have preferably a surface area of 0.2-3, preferably 0.3-1.5, more preferably 0.3.-1 cm². The moulds of the roller(s) for larger particles preferably have such a size that the surface area of the moulds are preferably, 0.5-20, preferably 1-20 more preferably 2-10 cm²

The presence of a coating means that the concentrates no longer have to be individually wrapped like conventional bouillon cubes. This enables packaging a plurality of cubes together in one container, wherein the concentrates to not contain a paper, plastic, metal or composite wrapper. Thus, the invention further relates to a container comprising one or more of concentrate particles according to the invention, wherein the concentrate particles preferably do not contain a wrapper.

The shape of the coated concentrate particle will to a large extent be determined by the shape of the core. Due to the roller-compacting as shaping technique for the core, the core will have two convex sides oppositely located, and the core preferably has the shape of a pellet, lentil, briquette, pebble, dragee, pillow, egg (optionally flattened), or ball (optionally flattened).

Roller compacting (also called briquetting, roll compacting, or prepared by roll-pressing, all of which are herein referred to as roller compacting) is e.g. disclosed for other materials in e.g. EP 1120436 and by P. Guignon and O. Simon in: Powder Technology 130, pp 41-48, 2003.

Roller compacting usually means feeding the material between a pair of rollers (or rolls), wherein the pair of rollers have their axis of rotation horizontally aligned and the circumference surface of both rollers facing eachother. Both rollers have moulds to shape the matter. The rolling action presses the matter together in the mould and by further rotation the matter is usually released. The moulds are preferably concave moulds. Typical concave moulds on the rollers are moulds in the shape of halves of a pellet, lentil, briquette, pebble, dragee, pillow, egg or ball: upon operation both mould-halves can form the concentrate particle in the shape of a pellet, lentil, briquette, pebble, dragee, pillow, egg or ball, respectively.

A preferred arrangement for preparing the core can be seen in figure 3 of EP 1120436, wherein the feeding to the pair of rollers is achieved by a hopper or screw feeder, but other feed mechanisms as known in the art may be used, e.g. using gravity. The rollers and feed mechanism may comprise additional equipment like e.g. scrapers, sieves, transport mechanisms for transporting the feed material or the shaped articles, packaging equipment, conveyor belts, separating equipment, flow pack or multi pack machines. Also, a drive mechanism for the rollers will usually be part of it, e.g. a motor and/or gearbox, and speed and pressure control of the rollers. The degree of compaction as well as the density can be adjustable by regulating the speed of the rollers and/or the speed of feeding the material to the rollers.

Following the manufacturing method, the core will preferably be a solid unit (i.e. not fluid or pasty).

The coating process can suitably be done in a rotary coating drum or vessel, or any other equipment for coating a plurality of solid objects as is known in the art, e.g. for coating nuts. Multiple layers of coating can be applied, to ensure a coating layer which is thick enough to obtain the desired benefits. Thus, typically coating is applied in cycles because there is a limited amount of coating which can be applied in one step. How many cycles are applied is dependent on the requested (total) amount of coating or as many layers should be applied. It may be desired to dry the freshly coated article between two coating cycles.
It can also be desired to apply a pre-coating prior to the desired outer coating layer, e.g. when the core surface is hydrophobic. For example, when wishing to apply an outer coating of a carbohydrate material, a pre-coating with (a solution of) gum arabic, modified starch or low DE maltodextrin can be desired.

The coating can be a single layer, or can be a composite of 2 or more layers one over the other (concentric coatings). It may be needed to first coat with an adhesive or fixing layer and finalise with a hard (semi-)glossy layer. An example of composite layers in the present invention is a composite layer comprising a layer comprising a gum material (e.g. gum arabic) and a layer comprising a carbohydrate or polyol. The coating layer may comprise fat, e.g. in amounts of at least 20% by weight. It was also surprisingly found that coating layers comprising (at least 10% of) chocolate could work well for e.g. sauce concentrate pellets. The coating is suitably present in an amount of 5-50% of the total weight of the concentrate particle, preferably more than 15% up to 40%, more preferably 20-40%. Thus, the core makes up 50-95%, preferably less than 85% (down to 60%), more preferably 60-80% by weight of the total concentrate particle.

It is preferred the concentrate particles according to the present invention have a coating layer is non-sticky and not hygroscopic. The coating layer is preferably a continuous film, and more preferably a smooth layer. In view of the latter, the coating layer of the article preferably does not comprise separate particulates or powdery material as outer coating layer.

In the process according to the invention the level of fat of the core ingredients is preferably 3-45% (by weight on the total compressed ingredients), more preferably 15-45% (by weight), most preferably 20-45% (by weight), in particular for bouillons, soups, seasonings. For high fat formulations (e.g. sauces, gravies) the level of fat can be preferred to be 10-60% (by weight on the total compressed ingredients), more preferably 20-60% (by weight). The fat used in the process and product according to the present invention is preferably solid at room temperature, preferably fat having a melting point above 35°C, more preferably above 40°C. However, part of the fat, up to 5% or even 10% of total amount of fat may be a lower melting fat (e.g. chicken fat) or a liquid oil. The solid fat used is preferably in the form of flakes or powdered fat. Part of the fat can be fat in disguise: as a composition containing fat, such as a creamer/whitener. For the purpose of this invention, the fat in such creamer will be calculated to be part of the 3-60% of fat. Use of such creamer is particularly preferred when very high levels of fat (e.g. above 45 or 50% of total fat on the total composition) are desired. Although the fats used in the present invention will be mainly fatty acid triglycerides, the fat fraction may also comprise (plant) stanols or (plant) sterols as part of the fat fraction.

In the present invention, the salt is preferably sodium and/or potassium chloride. The flour can be of conventional origin, e.g. corn, wheat, rice, rye flour. The starch can be natural and/or (chemically and/or physically) modified. The taste and/or flavour imparting substances may comprise one or more of: (dried) herbs (small leafs, parts of leafs, ground herbs), spices vegetable or meat flavour, vegetable-, meat-, fish-, or yeast-extract or -hydrolysate, dried vegetable- or fruit-powder or -particulates (particulates should preferably not be too big, e.g. less than 30% of the size of the solid concentrate).

The roller-compacted core in the present invention may further comprise maltodextrin in an amount of 2-20% by weight, such as for example as processing aid. Optionally, moisture (e.g. 2-10%) may be added to the mixture to be roller compacted, to e.g. facilitate coherence of the material.

The process according to the present invention can be used to prepare solid concentrates for various applications (for preparing a bouillon, broth, soup, sauce, as soup or sauce finisher, gravy, gravy finisher, roux, or for use as a seasoning), as long as they have the general composition as set out above.

The invention further relates to (the use of) a packaged coated solid bouillon as in claim 15.

The invention thus also relates to a process of roller compacting the above composition, followed by coating and by packaging one or more of the solid coated concentrate article(s) in a container, wherein the container, when closed, preferably has a volume which is at least 10%, preferably at least 15%, more preferably at least 20% larger than the volume of the solid concentrate article(s) in the container.

The invention thus also relates to a process of roller compacting the above composition, followed by coating and by packaging one or more of the solid coated concentrate article(s) in a container, wherein the container, when closed, preferably has a volume which is at least 10%, preferably at least 15%, more preferably at least 20% larger than the volume of the solid concentrate article(s) in the container.

### EXAMPLES

### Example 1: Container comprising coated vegetable bouillon concentrate in briquette shape.

### Core recipe:

| | |
|---|---|
| salt | 36% |
| glutamate | 13% |
| vegetable fat (melting at approx. 48-52°C) | 12% |
| maltodextrin | 11% |
| lactose | 10% |
| starch | 9% |
| vegetables dried (carrots, onions, leek) | 3% |
| yeast extract | 3% |
| spices & flavour | 2% |
| herbs | 1% |

The ingredients were mixed in a blender, after which the mixture was formed / compacted in a roller compactor into "pillow" or briquette-shape like products having a size of about 24x24x11 (mm) with rounded-off edges.

### Pre-coating (solution):

| | |
|---|---|
| gum arabic | 50% |
| water | 50% |

The pre coating was applied in 4 cycles (each about 0.5% of the weight of the pillows) in a rotating coating drum. In between a powdered mixture of 75% maltitol and 25% gum arabic was sprinkled onto the product surface (about 2% of the core weight).

### Coating (solution):

| | |
|---|---|
| maltitol | 55% |
| gum arabic | 1.5% |
| water | 43.4% |
| colour | 0.1% |

The main coating was sprayed in 39 cycles onto the pillow, in a rotating coating drum. In order to support a glossy surface approx. 0.1% of carnauba wax was added to the product at the final stage while it was still rotating in the coating vessel. The resulting product had a coating which was in weight approx. 25% of the final product weight, and a final weight of approximately 10g / piece. The shape was like above but changed sizes which were about 25.5x25.5x12.5 (mm). The appearance of the pillow was slightly yellowish. The coating dissolved in hot water (approx. 80°C) within 90 seconds. A suitable packaging would be 10 of such concentrate articles in a doy pack of 120 ml, or 1 such article in a blisterpack of 12 ml.

### Example 2: Container comprising coated soup concentrate (mushroom soup) in lentil shape

### Core recipe:

| | |
|---|---|
| vegetable fat (melting at approx. 48-52°C) | 19% |
| starch | 17% |
| creamer (DP644 DSM) | 17% |
| lactose | 15% |
| maltodextrin | 11% |
| mushroom powder | 6% |
| salt | 4% |
| yeast extracts | 3% |
| white wine powder | 2% |
| spices & flavour | 2% |
| glutamate | 2% |
| sugar | 2% |

The ingredients were mixed in a blender, whereafter mixture was formed / compacted using a roller compactor into lentil-shape like products, having a size of about 7x7x3.5 (mm).

### Coating (solution):

| | |
|---|---|
| isomalt | 63% |
| gum arabic | 1.5% |
| water | 35% |
| TiO₂ and colouring | 0.5% |

The coating was sprayed in 41 cycles on the core in a rotating drum. Within the first 2 cycles a powdered mixture of 2/3 isomalt and 1/3 gum arabic was sprinkled on the product. In order to support a glossy surface approx. 0.1% of carnauba wax was added to the product at the final stage while it was still rotating within the coating vessel. The resulting product has a coating being about 35% by weight of the final product, and a final weight of approx. 0.13g / piece. The shape was like above but changed sizes which are about 7.5x7.5x4 (mm). The appearance of the lentil was slightly creamy beige. The coating dissolved in boiling water within 30 seconds. A suitable packaging would be 100 of such concentrate articles in a doy pack of 200 ml.

### Example 3: Container comprising Mexican sauce concentrates in lentil-shape

### Core recipe:

| | |
|---|---|
| vegetable fat (melting area 48-52°C) | 23% |
| starch | 20% |
| lactose | 10% |
| vegetable powder (tomato, onion, leek) | 8% |
| red wine powder | 6% |
| salt | 7% |
| creamer (DP644 DSM) | 5% |
| caramel colour | 5% |
| flavours | 4% |
| sugar | 4% |
| glutamate | 3% |
| maltodextrin | 2% |
| gelatine | 2% |
| spices and herbs | 1% |

The ingredients were mixed in a blender, after which the mixture was formed / compacted using a roller compactor into lentil-shape like products having a size of about 6x6x3.5 (mm).

### Chocolate Coating (has to be melted):

| | |
|---|---|
| sugar | 49% |
| cocoa mass | 44.5% |
| cocoa butter | 6% |
| lecithin & flavour | 0.5% |

The melted chocolate was sprayed in 11 cycles onto the core in a rotating coating drum. To keep the glossy appearance of the product approx. 0.2% of shellac was added to the product at the final stage while it was still rotating in the coating vessel. The resulting product had a coating in an amount of about 33% of the weight of the final product and a final weight of approx. 0.13g / piece. The shape was like above but changed sizes which were about 6.5x6.5x4 (mm). The lentil has a bright brown appearance. The coating melted/dissolved in boiling water within 10 seconds. A suitable packaging would be 300 of such concentrate articles in a plastic box of 100 ml.

## Claims

1. Container comprising one or more of concentrate articles for preparing a bouillon, soup, sauce, roux, gravy or for use as a seasoning, the concentrate articles comprising a core of compressed ingredients and a coating layer, the core comprising (by weight):
- 2-70% of salt and/or 1-70% starch or flour,
and one or more of:
- 3-60% fat
- 10-95% of a taste and/or flavour imparting substance including herbs, spices, vegetable powders or particulates, flavourants, taste-enhancers, sugar,
wherein the core contains 50-95% by weight of the total mass of the solid concentrate, and wherein the core is coated with a coating layer being 5-50% by weight of the total mass of the concentrate particle, and wherein the core has two convex sides opposite to eachother, and wherein the concentrate articles have a weight of 0.04-30 g per concentrate article,
and wherein the coating layer is non-sticky and non-hygroscopic and wherein the concentrate has the shape of a pellet, lentil, briquette, pebble, dragee, pillow, egg or ball.

2. Container according to claim 1, wherein the coating layer completely encloses the core material.

3. Container according to claim 1 or 2, wherein the coating layer is adhered to the core material.

4. Container according to any one of claims 1 to 3, wherein the coating layer is a smooth layer.

5. Container according to any one of claims 1 to 4, wherein the concentrate articles do not contain a wrapper.

6. Container according to any one of claims 1 to 5, wherein the coating layer article does not comprise separate particulates or powdery material.

7. Container according to any one of claims 1 to 6, wherein the container, when closed, has a volume which is at least 10% larger than the volume of the solid concentrate articles in the container.

8. Container according to any one of claims 1 to 7, wherein the coating layer is a composite layer comprising 2 or more concentric layers.

9. Container according to any one of claims 1 to 8, wherein the composite layer comprise a layer comprising a gum material and a layer comprising a carbohydrate or polyol.

10. Container according to any one of claims 1 to 9, wherein the coating layer comprises at least 20% by weight of fat, based on the coating layer.

11. Process for preparing a container as in claim 1 comprising one or more of concentrate articles for preparing a bouillon, soup, sauce, roux, gravy or for use as a seasoning, the concentrate articles comprising a core of compressed ingredients and a coating layer, the core comprising (by weight):
- 2-70% of salt and/or 1-70% starch or flour,
and one or more of:
- 3-60% fat
- 10-95% of a taste and/or flavour imparting substance including herbs, spices, vegetable powders or particulates, flavourants, taste-enhancers, sugar,
which process comprises the steps of:
(a) mixing the ingredients of the core,
(b) compressing a portion of the material of the material obtained under (a) to a solid core by roller compacting using a pair of rollers, wherein both rollers have one or more pairs of concave moulds,
(c) covering the core as obtained under (b) with a coating layer
(d) putting one or more of the coated concentrates as obtained under (c) in a container,
wherein the concentrate articles have a weight of 0.04-30 g per concentrate article.

12. Process according to claim 11, wherein the container, when closed, has a volume which is at least 10% larger than the volume of the solid concentrate article(s) in the container.

13. Process according to claims 11 or 12, wherein the concave moulds on the rollers have the shape of half a pellet, lentil, briquette, pebble, dragee, pillow, (flattened) egg, (flattened) ball-shaped.

14. Process according to any one of claims 11 to 13, wherein step (c) is repeated with different coating layer material.

15. Use of a packaged solid concentrate article as in claim 1 for preparing a bouillon, soup, sauce, roux, or gravy or for use as seasoning, the concentrate article comprising (by weight on total composition):
- 2-70% of salt and/or 1-70% starch or flour,
and one or more of:
- 3-60% fat
- 10-95% of a taste and/or flavour imparting substance including herbs, spices, vegetable powders or particulates, flavourants, taste-enhancers, sugar,
wherein the core contains 50-95% by weight of the total mass of the solid concentrate, and wherein the core is coated with a coating layer being 5-50% by weight of the total mass of the concentrate particle, and wherein the core has two convex sides opposite to eachother, and wherein the concentrate articles have a weight of 0.04-30 g per concentrate article.

## Patentansprüche

1. Behälter, der einen oder mehrere Konzentratartikel zur Herstellung von Bouillon, Suppe, Soße, Mehlschwitze, Bratensaft oder zur Verwendung als Würzmittel umfasst, wobei die Konzentratartikel einen Kern aus zusammengepressten Bestandteilen und eine Beschichtung umfassen, wobei der Kern (nach Gewicht) Folgendes umfasst:
- 2-70 % Salz und/oder 1-70 % Stärke oder Mehl,
und einen oder mehrere der folgenden Bestandteile:
- 3-60 % Fett
- 10-95 % einer geschmacks- und/oder aromagebenden Substanz einschließlich Kräutern, Gewürzen, pflanzlichen Pulvern oder Partikeln, Geschmacksstoffen, Geschmacksverstärkern, Zucker,
wobei der Kern 50-95 Gew.-% der Gesamtmasse des festen Konzentrats enthält, und wobei der Kern mit einer Beschichtung beschichtet ist, die 5-50 Gew.-% der Gesamtmasse des Konzentratpartikels ausmacht, und wobei der Kern zwei einander gegenüberliegende, konvexe Seiten aufweist, und wobei die Konzentratartikel ein Gewicht von 0,04-30 g pro Konzentratartikel haben,
und wobei die Beschichtung nicht klebrig und nicht hygroskopisch ist und wobei das Konzentrat die Form eines Pellets, einer Linse, eines Briketts, eines Kiesels, eines Dragees, eines Kissens, eines Eies oder einer Kugel aufweist.

2. Behälter nach Anspruch 1, wobei die Beschichtung das Kernmaterial vollständig umschließt.

3. Behälter nach Anspruch 1 oder 2, wobei die Beschichtung an dem Kernmaterial anhaftet.

4. Behälter nach einem der Ansprüche 1 bis 3, wobei die Beschichtung eine weiche Schicht ist.

5. Behälter nach einem der Ansprüche 1 bis 4, wobei die Konzentratartikel keine Umhüllung aufweisen.

6. Behälter nach einem der Ansprüche 1 bis 5, wobei der beschichtete Artikel keine einzelnen Partikel oder Pulvermaterial umfasst.

7. Behälter nach einem der Ansprüche 1 bis 6, wobei der Behälter in geschlossenem Zustand ein Volumen aufweist, das mindestens 10 % größer ist als das Volumen der festen Konzentratartikel in dem Behälter.

8. Behälter nach einem der Ansprüche 1 bis 7, wobei die Beschichtung eine zusammengesetzte Schicht ist, die zwei oder mehr konzentrische Schichten umfasst.

9. Behälter nach einem der Ansprüche 1 bis 8, wobei die zusammengesetzte Schicht eine Schicht, die ein Gummimaterial enthält, und eine Schicht, die ein Kohlehydrat oder Polyol enthält, umfasst.

10. Behälter nach einem der Ansprüche 1 bis 9, wobei die Beschichtung mindestens 20 Gew.-% Fett, bezogen auf die Beschichtung, umfasst.

11. Verfahren zur Herstellung eines Behälters nach Anspruch 1, der einen oder mehrere Konzentratartikel zur Herstellung von Bouillon, Suppe, Soße, Mehlschwitze, Bratensaft oder zur Verwendung als Würzmittel umfasst, wobei die Konzentratartikel einen Kern aus zusammengepressten Bestandteilen und eine Beschichtung umfassen, wobei der Kern (nach Gewicht) Folgendes umfasst:
- 2-70 % Salz und/oder 1-70 % Stärke oder Mehl,
und einen oder mehrere der folgenden Bestandteile:
- 3-60 % Fett
- 10-95 % einer geschmacks- und/oder aromagebenden Substanz einschließlich Kräutern, Gewürzen, pflanzlichen Pulvern oder Partikeln, Geschmacksstoffen, Geschmacksverstärkern, Zucker,
wobei das Verfahren die folgenden Schritte umfasst:
(a) Mischen der Bestandteile des Kerns,
(b) Zusammenpressen eines Teils des Materials des unter (a) erhaltenen Materials zu einem festen Kern durch Rollverdichten unter Verwendung eines Rollenpaars, wobei beide Rollen ein oder mehrere Paare von konkaven Pressformen aufweisen,
(c) Überziehen des unter (b) erhaltenen Kerns mit einer Beschichtung
(d) Füllen eines oder mehrerer unter (c) erhaltener beschichteter Konzentrate in einen Behälter,
wobei die Konzentratartikel ein Gewicht von 0,04-30 g pro Konzentratartikel aufweisen.

12. Verfahren nach Anspruch 11, wobei der Behälter in geschlossenem Zustand ein Volumen aufweist, das mindestens 10 % größer ist als das Volumen des bzw. der festen Konzentratartikel in dem Behälter.

13. Verfahren nach Anspruch 11 oder 12, wobei die konkaven Pressformen auf den Rollen die Form der Hälfte eines Pellets, einer Linse, eines Briketts, eines Kiesels, eines Dragees, eines Kissens, eines (abgeflachten) Eies oder eines (abgeflachten) Balls aufweisen.

14. Verfahren nach einem der Ansprüche 11 bis 13, wobei der Schritt (c) mit verschiedenen Beschichtungsmaterialien wiederholt wird.

15. Verwendung eines verpackten festen Konzentratartikels nach Anspruch 1 zur Herstellung von Bouillon, Suppe, Soße, Mehlschwitze, Bratensaft oder zur Verwendung als Würzmittel, wobei der Konzentratartikel (nach Gewicht der Gesamtzusammensetzung) Folgendes umfasst:
- 2-70 % Salz und/oder 1-70 % Stärke oder Mehl,
und einen oder mehrere der folgenden Bestandteile:
- 3-60 Fett
- 10-95 % einer geschmacks- und/oder aromagebenden Substanz einschließlich Kräutern, Gewürzen, pflanzlichen Pulvern oder Partikeln, Geschmacksstoffen, Geschmacksverstärkern, Zucker,
wobei der Kern 50-95 Gew.-% der Gesamtmasse des festen Konzentrats enthält, und wobei der Kern mit einer Beschichtung beschichtet ist, die 5-50 Gew.-% der Gesamtmasse des Konzentratpartikels ausmacht, und wobei der Kern zwei einander gegenüberliegende, konvexe Seiten aufweist, und wobei die Konzentratartikel ein Gewicht von 0,04-30 g pro Konzentratartikel aufweisen.

## Revendications

1. Contenant comprenant un ou plusieurs articles de concentré pour préparer un bouillon, une soupe, une sauce, un roux, un jus de viande ou destinés à être utilisés comme assaisonnement, les articles de concentré comprenant un noyau d'ingrédients compressés et une couche d'enrobage, le noyau comprenant (en poids) :
- 2-70 % de sel et/ou 1-70 % d'amidon ou de farine,
et un ou plusieurs de :
- 3-60 % de graisse
- 10-95 % d'une substance conférant du goût et/ou de l'arôme comprenant des herbes, des épices, des poudres ou des particules végétales, des agents aromatisants, des exhausteurs de goût, du sucre,
où le noyau contient 50-95 % en poids de la masse totale du concentré solide, et où le noyau est enrobé d'une couche d'enrobage représentant 5-50 % en poids de la masse totale de la particule de concentré, et où le noyau possède deux côtés convexes opposés l'un par rapport à l'autre, et où les articles de concentré possède un poids de 0,04-30 g par article de concentré,
et où la couche d'enrobage est non collante et non hygroscopique, et où le concentré a la forme d'un granulé, d'une lentille, d'une briquette, d'un galet, d'une dragée, d'un carreau, d'un oeuf ou d'une boule.

2. Contenant selon la revendication 1, où la couche d'enrobage enferme complètement le matériel de noyau.

3. Contenant selon la revendication 1 ou 2, où la couche d'enrobage adhère au matériel de noyau.

4. Contenant selon l'une quelconque des revendications 1 à 3, où la couche d'enrobage est une couche lisse.

5. Contenant selon l'une quelconque des revendications 1 à 4, où les articles de concentré ne contiennent pas de papier d'emballage.

6. Contenant selon l'une quelconque des revendications 1 à 5, où l'article de la couche d'enrobage ne comprend pas de particules distinctes ou de matériel poudreux.

7. Contenant selon l'une quelconque des revendications 1 à 6, où le contenant, lorsqu'il est fermé, possède un volume qui est au moins 10 % plus grand que le volume des articles de concentré solide dans le contenant.

8. Contenant selon l'une quelconque des revendications 1 à 7, où la couche d'enrobage est une couche composite comprenant 2 couches concentriques ou plus.

9. Contenant selon l'une quelconque des revendications 1 à 8, où la couche composite comprend une couche comprenant un matériau de gomme et une couche comprenant un glucide ou un polyol.

10. Contenant selon l'une quelconque des revendications 1 à 9, où la couche d'enrobage comprend au moins 20 % en poids d'une graisse, sur la base de la couche d'enrobage.

11. Procédé pour préparer un contenant selon la revendication 1 comprenant un ou plusieurs articles de concentré pour préparer un bouillon, une soupe, une sauce, un roux, un jus de viande ou destinés à être utilisés comme assaisonnement, les articles de concentré comprenant un noyau d'ingrédients compressés et une couche d'enrobage, le noyau comprenant (en poids) :
- 2-70 % de sel et/ou 1-70 % d'amidon ou de farine,
et un ou plusieurs de :
- 3-60 % de graisse
- 10-95 % d'une substance conférant du goût et/ou de l'arôme comprenant des herbes, des épices, des poudres ou des particules végétales, des agents aromatisants, des exhausteurs de goût, du sucre,
le procédé comprenant les étapes qui consistent à :
(a) mélanger les ingrédients du noyau,
(b) compresser une partie des matériaux du matériel obtenu en (a) en un noyau solide par un compacteur à rouleaux en utilisant une paire de rouleaux, où les deux rouleaux comportent une ou plusieurs paires de moules concaves,
(c) recouvrir le noyau tel qu'obtenu en (b) avec une couche d'enrobage
(d) placer un ou plusieurs des concentrés enrobés tels qu'obtenus en (c) dans un contenant,
où les articles de concentré possèdent un poids de 0,04-30 g par article de concentré.

12. Procédé selon la revendication 11, dans lequel le contenant, lorsqu'il est fermé, possède un volume qui est au moins 10 % plus grand que le volume de l'article/des articles de concentré solide dans le contenant.

13. Procédé selon les revendications 11 ou 12, dans lequel les moules concaves sur les rouleaux ont la forme de la moitié d'un granulé, d'une lentille, d'une briquette, d'un galet, d'une dragée, d'un carreau, d'un oeuf (aplati), ou sont en forme de boule (aplatie).

14. Procédé selon l'une quelconque des revendications 11 à 13, dans lequel l'étape (c) est répétée avec un matériel de couche d'enrobage différent.

15. Utilisation d'un article de concentré solide conditionné selon la revendication 1 pour préparer un bouillon, une soupe, une sauce, un roux, un jus de viande ou destiné à être utilisé comme assaisonnement, l'article de concentré comprenant (en poids de la composition totale) :
- 2-70 % de sel et/ou 1-70 % d'amidon ou de farine,
et un ou plusieurs de :
- 3-60 % de graisse
- 10-95 % d'une substance conférant du goût et/ou de l'arôme comprenant des herbes, des épices, des poudres ou des particules végétales, des agents aromatisants, des exhausteurs de goût, du sucre,
où le noyau contient 50-95 % en poids de la masse totale du concentré solide, et où le noyau est enrobé d'une couche d'enrobage représentant 5-50 % en poids de la masse totale de la particule de concentré, et où le noyau possède deux côtés convexes opposés l'un par rapport à l'autre, et où les articles de concentré possèdent un poids de 0,04-30 g par article de concentré.
